# EUROPÄISCHE PATENTSCHRIFT

(11) **EP 0 899 452 B1**
(45) Veröffentlichungstag und Bekanntmachung des Hinweises auf die Patenterteilung: **09.07.2003**
(21) Anmeldenummer: 98106901.6
(22) Anmeldetag: 15.04.1998
(51) Int. Cl.: F02M 37/22

(54) **Flüssigkeitsfilter zum Reinigen von Kraftstoff**
Liquid filter for filtering fuel
Filtre pour liquides pour filtrer du carburant

(30) Priorität: 27.08.1997 DE 19737192
(43) Veröffentlichungstag der Anmeldung: 03.03.1999
(73) Patentinhaber: ROBERT BOSCH GMBH, 70442 Stuttgart (DE)
(72) Erfinder: Blasquez, Ivan Garcia, 28033 Madrid (ES); Torres, Enrique Casillas, 28017 Madrid (ES)

(56) Entgegenhaltungen:
- EP-A- 0 701 059
- EP-A- 0 819 458
- FR-A- 2 743 506
- US-A- 5 078 167
- US-A- 5 433 241

## Beschreibung

### Stand der Technik

Die Erfindung geht aus von einem Flüssigkeitsfilter zum Reinigen von Kraftstoff nach der im Oberbegriff des Anspruchs 1 näher angegebenen Gattung.

Es ist schon ein solches Flüssigkeitsfilter zum Reinigen von Kraftstoff aus der US-PS 5 433 241 bekannt, bei dem das Gehäuse in Vollkunststoffausführung ausgeführt ist. Dabei hat das Gehäuse ein becherförmiges Unterteil mit einem Zulaufanschluß und einem Rücklaufanschluß eines Druckreglers; ein deckelförmiges Oberteil des Gehäuses hat einen Schlauchstutzen als Ablaufanschluß von der Reinseite. Ein im Unterteil eingebautes Zusatzgehäuse bildet mit dem Unterteil zusammen einen Raum zur Aufnahme des Druckreglers, der den Druck auf der Reinseite eines radial durchströmten Filtereinsatzes begrenzt. Das Zusatzgehäuse bildet mit dem Oberteil einen Innenraum, der den Filtereinsatz aufnimmt. Zur lösbaren Befestigung von Unterteil und Oberteil dient eine in das Unterteil radial eingeschobene, U-förmige Spannfeder. Es ist nun von Nachteil, daß sich dieses Flüssigkeitsfilter mit seinem Kunststoffgehäuse nur zum Reinigen von Benzin eignet, da kein Wasserspeicherraum vorgesehen ist. Auch fehlt ein temperaturgesteuertes Umschaltventil auf der Schmutzseite. Auch baut das Flüssigkeitsfilter insofern aufwendig, als sein Gehäuse aus mindestens drei Kunststoffteilen besteht. Auch kann bei dieser Bauweise das Oberteil mit dem Unterteil nicht durch eine Schnellverschraubung lösbar verbunden werden.

Es sind auch Flüssigkeitsfilter für Dieselkraftstoff bekannt, die im Gehäuse einen unterhalb des Filtereinsatzes liegenden Wasserspeicherraum aufweisen. Solche Filter haben in der Regel ein Gehäuse aus Metall oder verwenden eine Glasschale für den Wasserspeicherraum, so daß sich deren Gehäusebauweise nicht für eine Vollkunststoffausführung eignet.

### Vorteile der Erfindung

Das erfindungsgemäße Flüssigkeitsfilter mit den kennzeichnenden Merkmalen des Hauptanspruchs hat demgegenüber den Vorteil, daß es ein einfach und kompakt bauendes Dieselfilter ermöglicht, in dessen Gehäuse in Vollkunststoffausführung ein Wasserspeicherraum auf der Reinseite und ein temperaturabhängig steuerndes Umschaltventil im Zulauf integriert sind. Das Gehäuse läßt sich trotzdem im wesentlichen zweiteilig ausbilden und kommt ohne ein drittes Gehäuseteil aus, was platzsparend und kostengünstig ist.

Durch die in den Unteransprüchen aufgeführten Maßnahmen sind vorteilhafte Weiterbildungen und Verbesserungen des im Anspruch 1 angegebenen Flüssigkeitsfilters möglich. Besonders vorteilhaft ist eine Ausbildung nach Anspruch 2, wodurch es sich zum Anschluß eines externen Wärmetauschers eignet, in dem bei Bedarf der Dieselkraftstoff vorgewärmt werden kann. Eine besonders zweckmäßige und kompakte Bauweise ergibt sich nach den Ansprüchen 3 und 4, so daß in einem einstückigen Unterteil mit Hilfe einer am Filtereinsatz anliegenden Formdichtung neben der Abdichtung von Schmutz- und Reinseite auch die notwendigen Druckmittelverbindungen zum Umschaltventil geschaffen werden, wobei das Umschaltventil neben dem Wasserspeicherraum raumsparend unterhalb des Filtereinsatzes angeordnet werden kann. Gemäß den Ansprüchen 5 und 6 wird diese Dichtfunktion und Verbindungsfunktion in besonders einfacher und günstiger Weise hergestellt. Besonders zweckmäßige Ausgestaltungen der Anschlüsse am Gehäuse lassen sich erzielen, wenn das Flüssigkeitsfilter gemäß den Ansprüchen 8 bis 10 ausgeführt wird. Ferner ist es besonders vorteilhaft, wenn gemäß Anspruch 11 die beiden Gehäuseteile mittels eines Schnell-Schraubverschlusses lösbar verbunden werden. Die Innenabdichtung zwischen Oberteil und Filtereinsatz kann dabei gemäß Anspruch 12 günstig ausgebildet werden. Ferner ist es von Vorteil, das Flüssigkeitsfilter gemäß Anspruch 13 auszuführen, wodurch ein Überströmventil im Deckel integriert werden kann und die Abflüsse zur Einspritzpumpe bzw. zum Tank am deckelförmigen Oberteil auf gleicher Höhe angeordnet werden können. Günstig ist ferner, wenn das Überströmventil gemäß Anspruch 14 als austauschbares Ventilmodul am Oberteil angeordnet wird. Für eine einfache Montage und sichere Betriebsweise ist es vorteilhaft, wenn gemäß Anspruch 15 eine Verdrehsicherung für den Filtereinsatz im Gehäuse vorgesehen wird. Ferner wird durch eine Ausbildung nach den Ansprüchen 16, 17, eine kompakte, kostengünstige und relativ einfache Bauweise begünstigt. Weitere vorteilhafte Ausgestaltungen ergeben sich aus der Beschreibung und der Zeichnung.

### Zeichnung

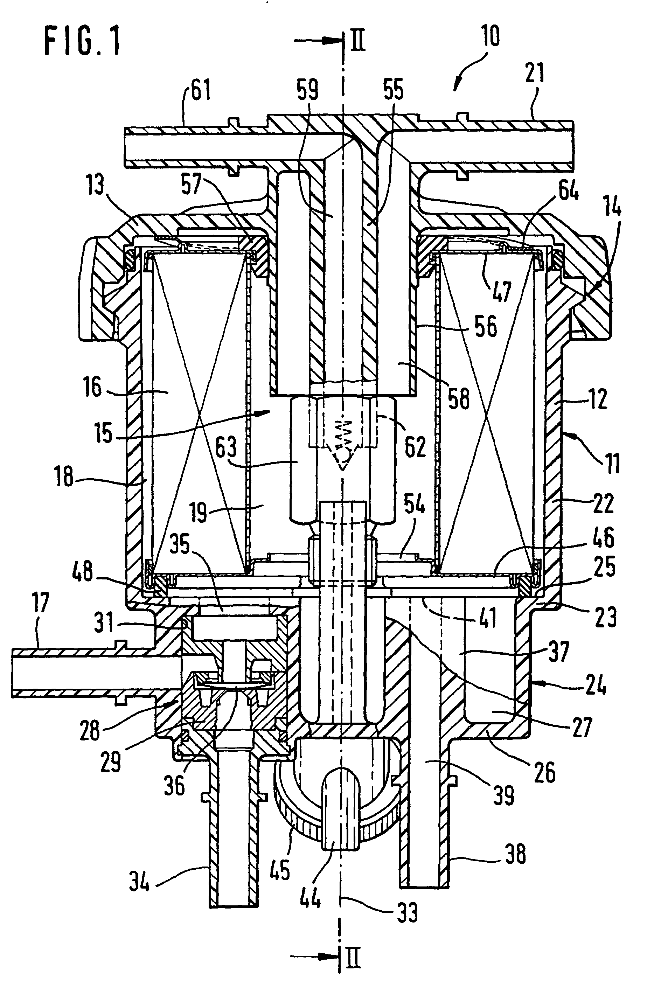

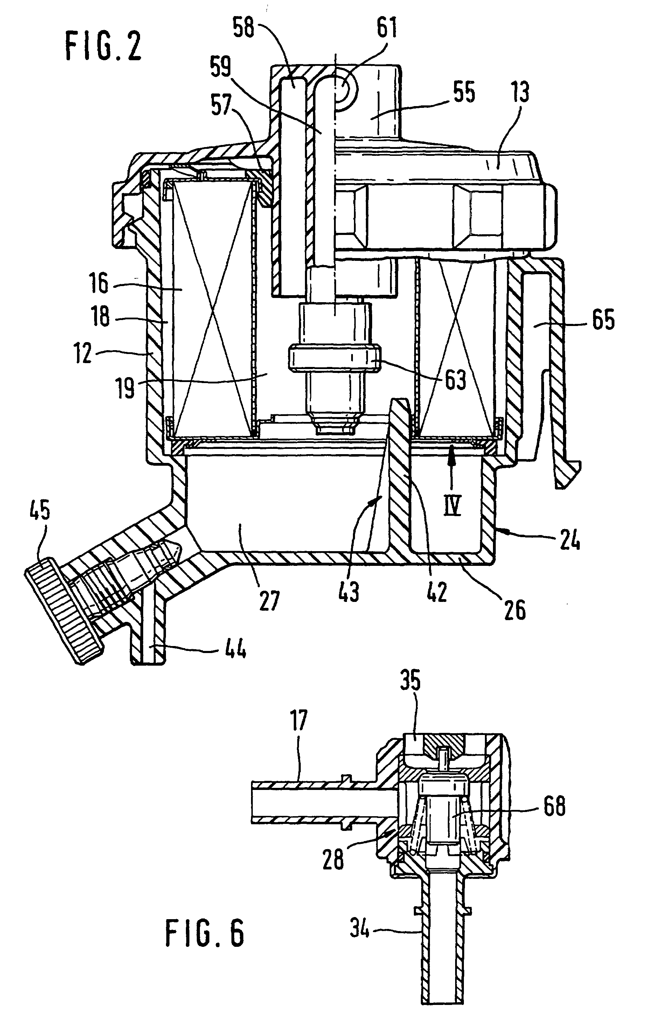

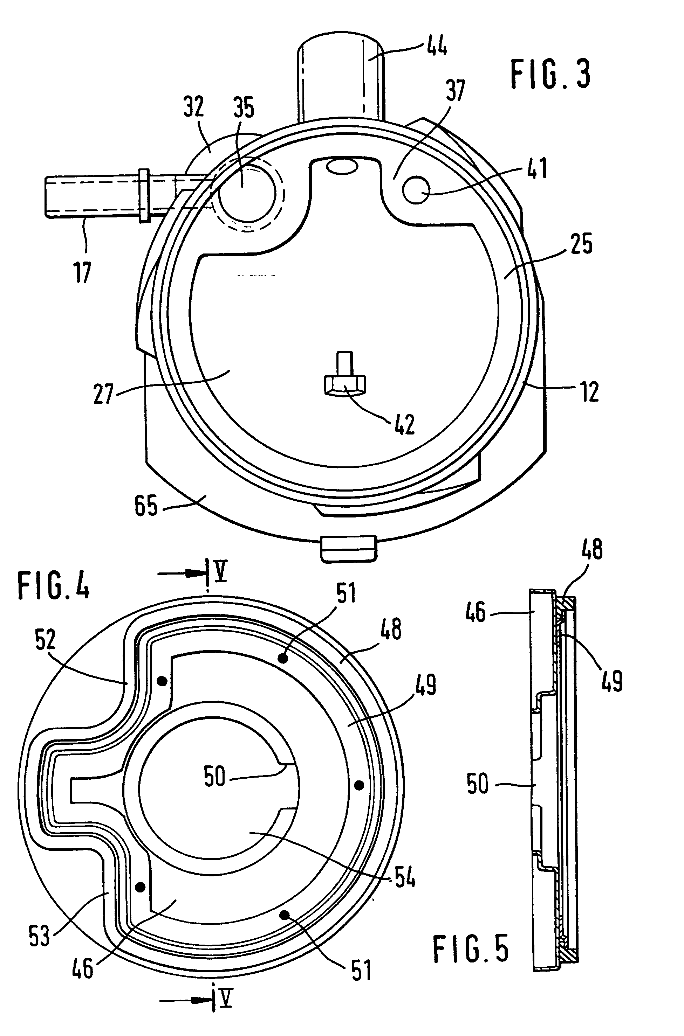

Ein Ausführungsbeispiel der Erfindung ist in der Zeichnung dargestellt und in der nachfolgenden Beschreibung näher erläutert. Es zeigen die Figur 1 einen Längsschnitt durch ein Flüssigkeitsfilter zum Reinigen von Dieselkraftstoff in vereinfachter Darstellung, Figur 2 einen Längsschnitt durch das Flüssigkeitsfilter nach II-II in Figur 1 in vereinfachter Darstellung mit kleinen Detailänderungen an Formdichtung und Überströmventil, Figur 3 eine Draufsicht auf das Unterteil eines Gehäuses des Flüssigkeitsfilters nach Figur 1, Figur 4 eine Ansicht der Endkappe nach Pfeil IV in Figur 2 mit einer gegenüber Figur 1 leicht geänderten Halterung des Formdichtrings, Figur 5 einen Längsschnitt nach V-V in Figur 4, und Figur 6 als Einzelheit ein anderes Umschaltventil zum Einbau in das Flüssigkeitsfilter nach Figur 1.

### Beschreibung des Ausführungsbeispiels

Die Figur 1 zeigt einen Längsschnitt durch ein Flüssigkeitsfilter 10 zum Reinigen von Dieselkraftstoff mit einem zweiteiligen Gehäuse 11, das in Vollkunststoffausführung ausgebildet ist. Das Gehäuse 11 hat ein im wesentlichen becherförmiges Unterteil 12 und ein deckelförmiges Oberteil 13, die beide aus Kunststoff bestehen. Unterteil und Oberteil sind durch einen Schnell-Schraubverschluß 14 lösbar miteinander verbunden, wozu ein entsprechendes Steilgewinde vorgesehen ist und das Oberteil 13 das Unterteil 12 außen übergreift. In dem vom Unterteil 12 und Oberteil 13 eingeschlossenen Innenraum 15 ist ein radial von innen nach außen durchströmter Filtereinsatz 16 angeordnet, der zwischen eine mit einem Zulaufanschluß 17 verbundene Schmutzseite 18 und einen mit einer Reinseite 19 verbundenen Ablaufanschluß 21 geschaltet ist.

Wie die Figur 1 in Verbindung mit Figur 2 näher zeigt, geht das becherförmige Unterteil 12 von einem kreiszylindrischen, zum Oberteil 13 hin offenen Abschnitt 22 über eine ringförmige Schulter 23 in einen Sockelabschnitt 24 über, dessen Außendurchmesser gegenüber dem Abschnitt 22 verringert ist. Die Schulter 23 bildet dadurch eine dem Innenraum 15 zugewandte, ringförmig verlaufende Schulterfläche 25. In dem Sockelabschnitt 24 ist zwischen dessen Boden 26 und dem Filtereinsatz 16 ein Wasserspeicherraum 27 ausgebildet, der neben einem in der gleichen radialen Ebene liegenden, temperaturabhängig schaltenden Umschaltventil 28 angeordnet ist.

Dieses Umschaltventil 28 ist als 3-Wege-Ventil ausgeführt und bildet eine Ventilpatrone 29, die in einer zylindrischen Ausnehmung 31 des Sockelabschnitts 24 liegt. Um diese Ausnehmung 31 im Sockelabschnitt 24 unterzubringen, ist im Bereich dessen Außenumfangs eine hülsenförmige Verdickung 32 angeformt, wie dies besonders deutlich in Figur 3 erkennbar ist, die eine Draufsicht auf das Unterteil 12 zeigt. Die zylindrische Ausnehmung 31 im Sockelabschnitt 24 ist nach unten hin offen, so daß die Ventilpatrone 39 von dort her leicht einbaubar ist. Die Achse der zylindrischen Ausnehmung 31 läuft dadurch parallel zu einer Längsachse 33 des Flüssigkeitsfilters 10.

An dem Sockelabschnitt 24 ist der Zulaufanschluß 17 angeordnet, der in einer radial zur Längsachse 33 verlaufenden Ebene liegt und radial an die hülsenförmige Verdickung 32 heranführt, so daß er zugleich schräg zur Mantelfläche des Sokkelabschnitts 24 verläuft, wie dies Figur 3 besonders deutlich zeigt. Der Zulaufanschluß 17 ist als Schlauchanschlußstutzen ausgebildet und führt das ankommende Druckmittel unmittelbar in das Umschaltventil 28 hinein. Die Ventilpatrone 29 des Umschaltventils 28 hat ferner einen nach unten herausragenden Ablaßanschluß 34 und einen entgegengesetzt liegenden Innenanschluß 35 im Gehäuse 11. Die Ventilpatrone 29 ist eine an sich bekannte Ventilbauart, die mit einer Bimetall-Schnappscheibe 36 als aktives Schaltelement arbeitet und abhängig von der Temperatur des im Zulaufanschluß 17 ankommenden Druckmittels dieses entweder zum Ablaßanschluß 34 oder zum Innenanschluß 35 steuert. Der nach unten aus dem Sockelabschnitt 24 herausragende Ablaßanschluß 34 ist ebenfalls als Schlauchanschlußstutzen ausgeführt und verläuft parallel zur Längsachse 33. Der Innenanschluß 35 des Umschaltventils 28 steht mit der Schmutzseite 18 in Verbindung, worauf später noch näher eingegangen wird.

Wie aus Figur 1 in Verbindung mit Figur 3 deutlich zu erkennen ist, verläuft im Sockelabschnitt 24 eine zweite hülsenförmige Verdickung 37, der ein nach außen ragender Einlaßanschluß 38 zugeordnet ist. Dieser Einlaßanschluß 38 ist ebenfalls als Schlauchanschlußstutzen ausgebildet und verläuft parallel zum Ablaßanschluß 34. Wie die Figur 3 näher zeigt, liegt diese zweite Verdickung 37 etwa um einen Drehwinkel von ca. 90 Grad zur ersten hülsenförmigen Verdickung 32 versetzt und ist in seinen radialen Ausdehnungen wesentlich kleiner. Diese zweite Verdickung 37 liegt ebenfalls im Bereich des Außenumfangs des Sockelabschnitts 24, so daß der in dieser Verdickung 37 angeordnete, gerade verlaufende Kanal 39 eine Kanalöffnung 41 bildet, die unmittelbar neben der Schulter 23 liegt und dabei von einer Ausbuchtung der Schulterfläche 25 umschlungen ist, wie dies Figur 3 besonders deutlich zeigt. Ferner ist in dem Sockelabschnitt 24 im Bereich des Wasserspeicherraums 27 eine vom Boden 26 aus senkrecht nach oben ragende, fingerartige Rippe 42 angeordnet, die als Teil einer Verdrehsicherung 43 für den Filtereinsatz 16 dient. Im Bereich zwischen den beiden Verdikkungen 32 und 37 ist am Boden 26 des Sockelabschnitts 24 ein Wasserablaß 44 angeordnet, der durch eine Verschlußschraube 45 absperrbar ist. Durch diese Ausbildung kann das Unterteil 12 des Gehäuses 11 als einstückiges Teil aus Kunststoff gespritzt werden.

Bei dem im Innenraum 15 des Gehäuses 11 angeordneten Filtereinsatz 16 handelt es sich um einen üblichen, kreisringförmigen Sternfiltereinsatz, der an seiner unteren Endkappe 46 und seiner oberen Endkappe 47 zur Trennung von Schmutzseite 18 und Reinseite 19 abgedichtet wird. Zu diesem Zweck ist an der ringförmigen, unteren Endkappe 46 eine besondere Formdichtung 48 angeordnet, welche die Abdichtung zwischen der Schulterfläche 25 im Gehäuse 11 und dem Filtereinsatz 16 übernimmt.

Die Figur 4 zeigt eine Ansicht der unteren Endkappe 46 nach Pfeilrichtung IV in Figur 2, aus der der besondere Verlauf der Formdichtung 48 erkennbar wird. Wie die Figur 4 in Verbindung mit Figur 5 näher zeigt, ist auf der kreisringförmigen Endkappe 46 ein ringförmig verlaufendes Halteblech 49 durch mehrere Schweißpunkte 51 befestigt, so daß die Formdichtung 48 mit ihrem L-förmigen Querschnitt eingehängt werden kann. Formdichtung 48 und Halteblech 49 sind so ausgeführt, daß die Formdichtung 48 im wesentlichen entlang des äußeren Umfangs der Endkappe 46 verläuft, jedoch im Bereich des Innenanschlusses 35 eine der ersten Verdickung 32 zugeordnete erste Einbuchtung 52 und im Bereich der Kanalöffnung 41 eine der zweiten Verdickung 37 zugeordnete, zweite Einbuchtung 53 aufweist. Bei der Montage des Filtereinsatzes 16 in dem Unterteil 12 kommt dabei die Formdichtung 48 derart auf der Schulterfläche 25 zu liegen, daß der Innenanschluß 35 sowie die Kanalöffnung 41 unmittelbar mit der Schmutzseite 18 Verbindung haben. Die axiale Höhe der Formdichtung 48 ist dabei so groß gewählt, daß zwischen dem Innenanschluß 35 und der unteren Endkappe 46 ein ausreichend hoher, radial sich erstreckender Durchflußquerschnitt verbleibt, über den das Druckmittel nach außen in den ringförmigen Raum zwischen dem Filtereinsatz 16 und dem Abschnitt 22 strömen kann. In Figur 4 ist ferner besonders deutlich eine Nut 50 in der unteren Endkappe 46 erkennbar, in welche die Rippe 42 zur Verdrehsicherung 43 eingefügt wird. Wie Figur 1 in Verbindung mit Figur 2 dabei zeigt, ist die axiale Länge dieser Rippe 42 so groß gewählt, daß sie in den Filtereinsatz 16 hineinragt. Über eine zentrale Öffnung 54 in der unteren Endkappe 46 steht die Reinseite 19 unmittelbar mit dem Wasserspeicherraum 27 in Verbindung.

Am deckelförmigen Oberteil 13 ist zentral ein zylindrischer Rohrstutzen 55 ausgebildet, der in den Filtereinsatz 16 hineinragt und an dessen Mantelfläche 56 eine ringförmige Dichtmanschette 57 anliegt. Diese Dichtmanschette 57 sitzt am inneren Rand der oberen Endkappe 47 und dichtet somit zwischen Schmutzseite 18 und Reinseite 19 ab. An dem Rohrstutzen 55 ist der Ablaufanschluß 21 angeordnet, der als radial abstehender Schlauchanschlußstutzen ausgeführt ist und der über einen Ablaufkanal 58 mit ringförmigem Querschnitt mit der Reinseite 19 in Verbindung steht. Der ringförmige Ablaufkanal 58 umgibt einen zentral liegenden, zweiten Ablaufkanal 59, der in winkliger Form geführt ist und zu einem zweiten Ablaufanschluß 61 führt. Der zweite Ablaufanschluß 61 liegt gleichachsig zum ersten Ablaufanschluß 21 und ist wie dieser als Schlauchanschlußstutzen ausgeführt. Beide Anschlüsse 21, 61 liegen somit in einer radial zur Längsachse 33 des Flüssigkeitsfilters verlaufenden Ebene. Der zweite Ablaufkanal 59 weist am Ende des Rohrstutzens 55 eine in die Reinseite 19 hineinragende, rohrförmige Verlängerung 62 auf, an der ein Überströmventil 63 befestigt ist. Dieses Überströmventil 63 ist als austauschbare Ventilpatrone mit einem federbelasteten Kugelventil ausgeführt und ermöglicht ein Abströmen von Druckmittel aus der Reinseite 19 zum zweiten Ablaufanschluß 61, wenn der im Überströmventil 63 eingestellte Druck überschritten wird.

Um den Filtereinsatz 16 im Innenraum 15 in seiner Lage zu halten, ist zwischen dem Oberteil 13 und der oberen Endkappe 47 eine Wellfeder 64 angeordnet, welche den Filtereinsatz 16 mit der Formdichtung 48 auf die Schulterfläche 25 drückt und somit für eine sichere Abdichtung zwischen Schmutzseite und Reinseite sorgt. Um den Flüssigkeitsfilter 10 an einem anderen Maschinenteil zu befestigen, ist am Unterteil 12 des Gehäuses 11 ein Flansch 65 angeformt, wie dies besonders deutlich in Figur 2 und 3 erkennbar ist.

Die Wirkungsweise des Flüssigkeitsfilters 10 wird wie folgt erläutert, wobei die grundsätzliche Funktion derartiger Filtereinsätze als bekannt vorausgesetzt wird.

Der zu reinigende Dieselkraftstoff wird dem Flüssigkeitsfilter 10 am Zulaufanschluß 17 zugeführt und strömt dadurch unmittelbar in das Umschaltventil 28. Abhängig von der Temperatur des zuströmenden Kraftstoffs schaltet die Bimetall-Schnappscheibe 36 in der Ventilpatrone 29 und steuert davon abhängig den Kraftstoff entweder zum Innenanschluß 35 oder zum Ablaufanschluß 34. Bei ausreichend hoher Temperatur des ankommenden Krafstoffs wird dieser vom Umschaltventil 28 zum Innenanschluß 35 gesteuert, und strömt von dort durch die von der Formdichtung 48 abgegrenzte Ausnehmung zwischen unterer Endkappe 46 und Schulterfläche 25 auf die Schmutzseite 18. Der Dieselkraftstoff durchströmt radial von außen nach innen den sternförmig aufgebauten Filtereinsatz 16 und gelangt gereinigt auf die Reinseite 19. Beim Durchströmen des Filterpapiers im Filtereinsatz 16 wird nicht nur der Kraftstoff vom Schmutz gesäubert, sondern auch Wasser abgeschieden, das dann auf der Reinseite 19 über die Öffnung 54 hinunter in den Wasserspeicherraum 27 gelangt und sich dort sammelt. Abgeschiedenes Wasser kann aus dem Wasserspeicherraum 27 über den Wasserablaß 44 durch Öffnen mittels der Schraube 45 erfolgen. Der gereinigte Kraftstoff gelangt von der Reinseite 19 über den ersten Ablaufkanal 58 mit ringförmigem Querschnitt zum ersten Ablaufanschluß 21 und von dort weiter zu einer Einspritzpumpe bzw. zu einem Einspritzsystem, Bei Überschreiten eines vorgegebenen Drucks kann auch von der Reinseite 19 Kraftstoff über das Überströmventil 62 zum zweiten Ablaufanschluß 61 abströmen und von dort zum Tank zurückfließen.

Ist der am Zulaufanschluß 17 ankommende Dieselkraftstoff zu kalt, so steuert die Bimetall-Schnappscheibe 36 im Umschaltventil 28 das Druckmittel unmittelbar in den Ablaufanschluß 34. Von dort wird es zu einer nicht näher gezeichneten, an sich bekannten Heizeinrichtung geleitet und entsprechend aufgewärmt. Der erwärmte Kraftstoff aus der Heizeinrichtung wird anschließend am Einlaßanschluß 38 zugeführt und strömt von dort unmittelbar auf die Schmutzseite 18. Der weitere Strömungsverlauf durch den Filtereinsatz 16 hindurch ist wie zuvor beschrieben.

Bei vorliegendem Flüssigkeitsfilter 10 läßt sich das Gehäuse 11 in Vollkunststoffausführung herstellen, wobei lediglich ein Unterteil 12 und ein Oberteil 13 nötig ist, die bei einem Austausch eines verbrauchten Filtereinsatzes 16 leicht voneinander trennbar sind. Das Flüssigkeitsfilter 10 baut besonders kompakt, wobei der Wasserspeicherraum 27 und das temperaturabhängig schaltende Umschaltventil 28 auf engstem Raum unterhalb des Filtereinsatzes angeordnet sind. Zum Aufwärmen des Dieselkraftstoffs kann dabei ein extern angeordnetes Heizelement verwendet werden. Zudem ist ein Überströmventil im Inneren des Flüssigkeitsfilters 10 integriert, so daß der Abfluß von der Reinseite zur Einspritzpumpe einerseits und andererseits über den zweiten Ablaufanschluß 61 zum Tank, am Oberteil 13 in gleicher Bauhöhe ausgebildet sind. Eine Verdrehsicherung 43 sorgt für eine einfache und sichere Montage des Filtereinsatzes 16. Als Filtereinsatz 16 kann dabei ein bisher vorhandenes Serienteil verwendet werden, das lediglich durch eine spezielle Formdichtung 48 an die besonderen Einbauverhältnisse angepaßt wird.

Die Figur 6 zeigt als Einzelheit einen Längsschnitt durch das Umschaltventil 28, bei dem die Ventilpatrone anstelle einer Bimetall-Schnappscheibe einen Thermostat-Ventileinsatz 68 aufweist, der aber die gleiche Funktion übernimmt.

Selbstverständlich sind an dem gezeigten Flüssigkeitsfilter 10 Änderungen möglich, ohne vom Gedanken der Erfindung abzuweichen.

## Patentansprüche

1. Flüssigkeitsfilter zum Reinigen von Kraftstoff mit einem aus Kunststoff bestehenden Gehäuse, das ein becherförmiges Unterteil mit einem Zulaufanschluß und ein deckelartiges Oberteil mit einem Ablaufanschluß für gereinigten Kraftstoff aufweist, wobei Unterteil und Oberteil lösbar miteinander verbunden sind und in ihrem Inneren einen zylindrischen, austauschbaren Filtereinsatz aufnehmen, der radial von außen nach innen durchströmt ist und zwischen Zulauf- und Ablaufanschluß geschaltet ist, wobei seine obere stirnseitige Endkappe dichtend am Oberteil anliegt, während seine untere Endkappe zwischen Schmutz- und Reinseite abdichtend im Gehäuse angeordnet ist, **dadurch gekennzeichnet, daß** das Unterteil (12) im Bereich zwischen seinem Boden (26) und dem Filtereinsatz (16) einen Sockelabschnitt (24) aufweist, in dem ein Wasserspeicherraum (27) sowie ein temperaturabhängig schaltendes Umschaltventil (28) angeordnet sind, wovon der Wasserspeicherraum (27) mit der Reinseite (19) des Flüssigkeitsfilters (10) und mit einem Wasserablaß (44) in Verbindung steht, während das 3-Wege-steuernde, mit dem Zulaufanschluß (17) verbundene Umschaltventil (28) einen mit der Schmutzseite (18) verbundenen Innenanschluß (35) sowie einen nach außen geführten Ablaufanschluß (34) aufweist.

2. Flüssigkeitsfilter nach Anspruch 1, **dadurch gekennzeichnet, daß** im Sockelabschnitt (24) ein Einlaßanschluß (38) ausgebildet ist, dessen innere Kanalöffnung (41) mit der Schmutzseite (18) in Verbindung steht.

3. Flüssigkeitsfilter nach Anspruch 1 oder 2, **dadurch gekennzeichnet, daß** zwischen unterer Endkappe (46) des Filtereinsatzes (16) und Unterteil (12) des Gehäuses (11) eine Schmutz- (18) und Reinseite (19) voneinander trennende Formdichtung (48) angeordnet ist, die den Innenanschluß (35) und insbesondere die Kanalöffnung (41) mit der Schmutzseite (18) verbindet.

4. Flüssigkeitsfilter nach einem der Ansprüche 1 bis 3, **dadurch gekennzeichnet, daß** der Innenanschluß (35) und insbesondere die Kanalöffnung (41) im Bereich der kreisförmigen Außenwand des Sockelabschnittes (24) liegen und daß die Formdichtung (48) im wesentlichen eine kreisringförmige Form aufweist, die mindestens eine im Bereich des Innenanschlusses (35) liegende, nach innen zu verlaufende Einbuchtung (52) aufweist und insbesondere eine zweite, der Kanalöffnung (41) zugeordnete zweite Einbuchtung (53) hat.

5. Flüssigkeitsfilter nach Anspruch 4, **dadurch gekennzeichnet, daß** das Unterteil (12) am Übergang in den Sockelabschnitt (24) eine Schulter (23) aufweist, die im Bereich des Innenanschlusses (35) und insbesondere der Kanalöffnung (41) achparallel verlaufende Verdickungen (32, 37) aufweist und an deren Schulterfläche (25) die Formdichtung (48) anliegt.

6. Flüssigkeitsfilter nach einem der Ansprüche 3 bis 5, **dadurch gekennzeichnet, daß** die Formdichtung (48) im Bereich ihrer kreisförmigen Abschnitte im wesentlichen am Außenrand der unteren Endkappe (46) verläuft und die Einbuchtungen (52, 53) in ihrer radialen Ausdehnung gleich oder kleiner sind als die radiale Breite der ringförmigen, unteren Endkappe (46).

7. Flüssigkeitsfilter nach einem der Ansprüche 1 bis 6, **dadurch gekennzeichnet, daß** das Unterteil (12) einstückig ausgebildet ist.

8. Flüssigkeitsfilter nach einem der Ansprüche 2 bis 7, **dadurch gekennzeichnet, daß** der Ablaßanschluß (34) und der Einlaßanschluß (38) als zueinander parallele Schlauchstutzen am Boden (26) des Sockelabschnitts (24) ausgebildet sind.

9. Flüssigkeitsfilter nach einem der Ansprüche 1 bis 8, **dadurch gekennzeichnet, daß** der Zulaufanschluß (17) ein Schlauchstutzen ist, der in einer radial zur Filterlängsachse (33) verlaufenden Ebene liegt und in einem Bereich an die Außenwand des Sockelabschnitts (24) heranführt, in dem eine zylindrische, achsparallel zur Filterlängsachse verlaufende Ausnehmung (31) im Sockelabschnitt (24) einen Ventileinsatz (29) des Umschaltventils (28) aufnimmt.

10. Flüssigkeitsfilter nach Anspruch 8 oder 9, **dadurch gekennzeichnet, daß** der Kanal im Einlaßanschluß (38) gerade verläuft, insbesondere achsparallel zur Filterlängsachse (33) und seine Kanalöffnung (41) in einem verbreiterten Bereich der Schulterfläche (25) liegt.

11. Flüssigkeitsfilter nach einem der Ansprüche 1 bis 10, **dadurch gekennzeichnet, daß** das deckelförmige Oberteil (13) über einen Schnell-Schraubverschluß (14) mit dem Unterteil (12) lösbar verbunden ist.

12. Flüssigkeitsfilter nach Anspruch 11, **dadurch gekennzeichnet, daß** das Oberteil (13) einen zentralen, in den Filtereinsatz (16) hineinragenden Rohrstutzen (55) aufweist, an dessen Mantelfläche (56) ein Dichtring (57) anliegt, der am Innenrand der oberen Endkappe (47) dichtend angebracht ist.

13. Flüssigkeitsfilter nach Anspruch 12, **dadurch gekennzeichnet, daß** das Oberteil (13) einen radial zur Längsachse verlaufenden Schlauchstutzen als Ablaufanschluß (21) aufweist, dessen Ablaufkanal (51) in abgewinkelter Form über den Rohrstutzen (55) mit der Reinseite (19) Verbindung hat und daß ein zweiter, insbesondere gleichachsig zum ersten Schlauchstutzen liegender Ablaufstutzen (61) angeordnet ist, der über ein Überströmventil (63) mit der Reinseite (19) Verbindung hat.

14. Flüssigkeitsfilter nach Anspruch 13, **dadurch gekennzeichnet, daß** das Überströmventil (63) als Ventilpatrone ausgebildet ist, die am freien Ende des Rohrstutzens (55) angeordnet ist und in den reinseitigen Innenraum (19) des Filtereinsatzes (16) ragt und die einen zum zweiten Ablaufstutzen (61) führenden, zweiten Ablaufkanal (59) absichert.

15. Flüssigkeitsfilter nach einem der Ansprüche 1 bis 14, **dadurch gekennzeichnet, daß** für den Filtereinsatz (16) eine Verdrehsicherung (43) vorgesehen ist, die insbesondere eine am Boden (26) befestigte und die untere Endkappe (46) in ihrer Drehlage sichernde, fingerartige Rippe (42) aufweist.

16. Flüssigkeitsfilter nach Anspruch 13 oder 14, **dadurch gekennzeichnet, daß** der erste Ablaufkanal (58) im Rohrstutzen (55) einen ringförmigen Querschnitt aufweist und konzentrisch zum zweiten Ablaufkanal (59) verläuft.

17. Flüssigkeitsfilter nach einem der Ansprüche 15 bis 16, **dadurch gekennzeichnet, daß** der Innenanschluß (35), die Kanalöffnung (41) und die Schulterfläche (25) im wesentlichen in der gleichen radialen Ebene liegen, von der die untere Endkappe (46) durch den Formdichtring (48) im Abstand gehalten wird.

18. Flüssigkeitsfilter nach einem der Ansprüche 3 bis 17, **dadurch gekennzeichnet, daß** an der kreisringförmig ausgebildeten, unteren Endkappe (46) ein Halteblech (49) befestigt ist, das mit der Endkappe einen radial nach außen offenen, ringförmig verlaufenden Schlitz bildet, und daß die einen L-förmigen Querschnitt aufweisende Formdichtung (48) mit ihrem einen Schenkel in den Schlitz eingehängt ist.

## Claims

1. Liquid filter for cleaning fuel, with a housing composed of plastic, which has a cup-shaped bottom part with a feed connection and a cover-type top part with a discharge connection for cleaned fuel, the bottom part and the top part being connected releasably to one another and accommodating in their interior a cylindrical interchangeable filter insert, through which the fuel flows radially from the outside inwards and which is inserted between the feed and the discharge connection, its upper end cap resting in a sealing manner on the top part while its lower end cap is arranged in a sealing manner in the housing, between the dirty and the clean side, **characterized in that**, in the region between its bottom (26) and the filter insert (16), the bottom part (12) has a base portion (24), in which a water storage space (27) and a changeover valve (28) that switches in a temperature-dependent manner are arranged, of which the water storage space (27) is connected to the clean side (19) of the liquid filter (10) and to a water outlet (44), while the three-way changeover valve (28), which is connected to the feed connection (17), has an inner connection (35) connected to the dirty side (18) and a discharge connection (34) taken to the outside.

2. Liquid filter according to Claim 1, **characterized in that** an inlet connection (38), the internal duct opening (41) of which is connected to the dirty side (18), is formed in the base portion (24).

3. Liquid filter according to Claim 1 or 2, **characterized in that** a shaped seal (48), which connects the inner connection (35) and, especially, the duct opening (41) to the dirty side (18), is arranged between the lower end cap (46) of the filter insert (16) and the bottom part (12) of the housing (11).

4. Liquid filter according to one of Claims 1 to 3, **characterized in that** the inner connection (35) and, especially, the duct opening (41) are situated in the region of the circular outer wall of the base portion (24), and **in that** the shaped seal (48) essentially has an annular shape, which has at least one recess (52), which is situated in the region of the inner connection (35) and extends inwards, and, in particular, has a second recess (53), which is associated with the duct opening (41).

5. Liquid filter according to Claim 4, **characterized in that**, at the transition to the base portion (24), the bottom part (12) has a shoulder (23), which has thickened portions (32, 37) extending parallel to the axis in the region of the inner connection (35) and, in particular, of the duct opening (41) and against the shoulder surface (25) of which the shaped seal (48) rests.

6. Liquid filter according to one of Claims 3 to 5, **characterized in that**, in the region of its circular portions, the shaped seal (48) extends essentially along the outer edge of the lower end cap (46), and the radial extent of the recesses (52, 53) is equal to or less than the radial width of the annular lower end cap (46).

7. Liquid filter according to one of Claims 1 to 6, **characterized in that** the bottom part (12) is of one-piece design.

8. Liquid filter according to one Claims 2 to 7, **characterized in that** the outlet connection (34) and the inlet connection (38) are designed as mutually parallel hose connection pieces on the bottom (26) of the base portion (24).

9. Liquid filter according to one of Claims 1 to 8, **characterized in that** the feed connection (17) is a hose connection piece, which lies in a plane extending radially with respect to the longitudinal axis (33) of the filter and leads up to the outer wall of the base portion (24) in a region in which a cylindrical recess (31) in the base portion (24), extending parallel to the longitudinal axis of the filter, accommodates a valve insert (29) of the changeover valve (28).

10. Liquid filter according to Claim 8 or 9, **characterized in that** the duct in the inlet connection (38) is straight, in particular extending parallel to the longitudinal axis (33) of the filter, and its duct opening (41) lies in a widened region of the shoulder surface (25).

11. Liquid filter according to one of Claims 1 to 10, **characterized in that** the cover-shaped top part (13) is connected releasably to the bottom part (12) by means of a quick-acting screw joint (14).

12. Liquid filter according to Claim 11, **characterized in that** the top part (13) has a central tubular stub (55), which projects into the filter insert (16) and against the outer surface (56) of which there rests a sealing ring (57), which is fitted in a sealing manner on the inner edge of the upper end cap (47).

13. Liquid filter according to Claim 12, **characterized in that** the top part (13) has as a discharge connection (21) a hose connection piece extending radially with respect to the longitudinal axis, the discharge duct (51) of which is connected to the clean side (19) in an angled form via the tubular stub (55), and **in that** a second discharge stub (61), in particular a discharge stub which is coaxial with the first hose connection piece, is provided, being connected to the clean side (19) via a relief valve (63).

14. Liquid filter according to Claim 13, **characterized in that** the relief valve (63) is designed as a valve cartridge, which is arranged at the free end of the tubular stub (55) and projects into the clean-side interior space (19) of the filter insert (16) and which secures a second discharge duct (59) leading to the second discharge stub (61).

15. Liquid filter according to one of Claims 114, **characterized in that** the filter insert (16) is provided with an anti-rotation safeguard (43) which, in particular, has a finger-type rib (42), the latter being attached to the bottom (26) and securing the lower end cap (46) in its rotational position.

16. Liquid filter according to Claim 13 or 14, **characterized in that** the first discharge duct (58) in the tubular stub (55) has an annular cross section and extends concentrically with respect to the second discharge duct (59).

17. Liquid filter according to either of Claims 15 and 16, **characterized in that** the inner connection (35), the duct opening (41) and the shoulder surface (25) lie essentially in the same radial plane, from which the lower end cap (46) is held at a distance by the shaped sealing ring (48).

18. Liquid filter according to one of Claims 3 to 17, **characterized in that** the lower end cap (46) of annular design has secured on it a holding plate (49), which with the end cap forms an annular slot which is open radially to the outside, and **in that** the shaped seal (48), which has an L-shaped cross section, is hooked into the slot by one leg.

## Revendications

1. Filtre à liquides pour filtrer du carburant comprenant un boîtier en matière plastique ayant une partie inférieure en forme de gobelet avec un branchement d'alimentation et une partie supérieure en forme de couvercle avec un branchement de sortie du carburant filtré,
la partie inférieure et la partie supérieure étant reliées de manière détachable et elles reçoivent à l'intérieur une garniture de filtre, cylindrique, remplaçable, cette garniture étant traversée radialement de l'extérieur vers l'intérieur en étant placée entre le branchement d'alimentation et le branchement de sortie, son capuchon d'extrémité, frontal, supérieur, étant appliqué de manière étanche contre la partie supérieure et son capuchon d'extrémité, inférieur, étant placé de manière étanche dans le boîtier, entre le côté non filtré et le côté filtré,
**caractérisé en ce que**
la partie inférieure (12) comporte au niveau de son fond (26) et de la garniture de filtre (16), un segment (24) en forme de socle dans lequel est prévue une chambre de réception d'eau (27) ainsi qu'une soupape de commutation (28) commutant en fonction de la température,
la chambre de réception d'eau (27) communiquant avec le côté filtre (19) du filtre à liquide (10) et avec une sortie d'eau (44) alors que la soupape de commutation (28), fonctionnant comme distributeur à trois voies, est reliée au branchement d'alimentation (17) et comporte un branchement intérieur (35) relié au côté non filtré (18) ainsi qu'un branchement de sortie (34), conduisant vers l'extérieur.

2. Filtre à liquide selon la revendication 1,
**caractérisé en ce que**
le segment de socle (24) comporte un branchement d'entrée (38) dont l'ouverture de canal intérieur (41) communique avec le côté non filtré (18).

3. Filtre à liquide selon la revendication 1 ou 2,
**caractérisé en ce qu'**
un joint moulé (48), séparant le côté non filtré (18) et le côté filtré (19), est prévu entre le capuchon d'extrémité inférieur (46) de la garniture de filtre (16) et la partie inférieure (12) du boîtier (11), ce joint reliant le branchement intérieur (35) et notamment l'ouverture de canal (41) au côté non filtré (18).

4. Filtre à liquide selon l'une des revendications 1 à 3,
**caractérisé en ce que**
le branchement intérieur (35), en particulier d'ouverture de canal (41), se situe au niveau de la paroi extérieure circulaire du segment de socle (24), et le joint moulé (48) présente essentiellement une forme d'anneau de cercle qui comporte au moins une partie en creux (52) tournée vers l'intérieur dans la zone du branchement intérieur (35), et notamment une seconde partie en creux (53) associée à l'ouverture de canal (41).

5. Filtre à liquide selon la revendication 4,
**caractérisé en ce que**
la partie inférieure (12) présente un épaulement (23) à la jonction avec le segment de socle (24), cet épaulement ayant au niveau du branchement intérieur (35) et en particulier de l'ouverture de canal (41), des renforcements (32, 37) d'axes parallèles, et le joint moulé (48) vient contre la surface d'épaulement (25) de ces renforcements.

6. Filtre à liquide selon l'une des revendications 3 à 5,
**caractérisé en ce que**
le joint moulé (48), au niveau de ses segments en arc de cercle, passe essentiellement le long du bord extérieur du capuchon d'extrémité inférieur (46), et les parties en creux (52, 53) ont une extension radiale identique ou inférieure à l'extension radiale du capuchon d'extrémité inférieur (46) de forme annulaire.

7. Filtre à liquide selon l'une des revendications 1 à 6,
**caractérisé en ce que**
la partie inférieure (12) est en une seule pièce.

8. Filtre à liquide selon l'une des revendications 2 à 7,
**caractérisé en ce que**
le branchement de sortie (34) et le branchement d'entrée (38) sont réalisés au fond (26) du segment de socle (24), sous la forme d'ajutages pour tuyaux, parallèles.

9. Filtre à liquide selon l'une des revendications 1 à 8,
**caractérisé en ce que**
le branchement d'alimentation (17) est un ajutage pour tuyaux, situé dans un plan radial passant par l'axe longitudinal (33) du filtre et qui arrive dans une zone de la paroi extérieure du segment de socle (24) dans laquelle une cavité (31) cylindrique, d'axe parallèle à l'axe longitudinal du filtre, reçoit dans le segment de socle (24) une garniture de soupape (29) de la soupape de commutation (28).

10. Filtre à liquide selon les revendications 8 ou 9,
**caractérisé en ce que**
le canal est droit dans le branchement d'entrée (38), en particulier d'axe parallèle à l'axe longitudinal du filtre (33) et son ouverture de canal (41) se situe dans une zone élargie de la surface d'épaulement (25).

11. Filtre à liquide selon les revendications 1 à 10,
**caractérisé en ce que**
la partie supérieure (13) en forme de couvercle est reliée de manière détachable à la partie inférieure (12) par une liaison à vis rapide (14).

12. Filtre à liquide selon la revendication 11,
**caractérisé en ce que**
la partie supérieure (13) comporte un manchon tubulaire (55) central pénétrant dans la garniture de filtre (16), un joint annulaire (57) venant contre la surface enveloppe (56) de ce manchon, ce joint étant logé de manière étanche contre le bord intérieur du capuchon d'extrémité supérieur (47).

13. Filtre à liquide selon la revendication 12,
**caractérisé en ce que**
la partie supérieure (13) comporte comme branchement de sortie (21) un ajutage pour tuyaux dirigé radialement par rapport à l'axe longitudinal et dont le canal de sortie (51), de forme coudée, est relié par l'intermédiaire du manchon tubulaire (55) au côté filtré (19), et
un second ajutage de sortie (61), notamment coaxial au premier ajutage de tuyau, est relié par une soupape de débordement (63) au côté filtré (19).

14. Filtre à liquide selon la revendication 13,
**caractérisé en ce que**
la soupape de débordement (63) est constituée par une cartouche de soupape prévue à l'extrémité libre du manchon tubulaire (55) pénétrant dans le volume intérieur (19) du côté du liquide filtré de la garniture de filtre (16) et coopère avec un second canal de sortie (59) conduisant au second ajutage de sortie (61).

15. Filtre à liquide selon l'une des revendications 1 à 14,
**caractérisé par**
un moyen de blocage en rotation (43) prévu pour la garniture de filtre (16), ce moyen étant constitué notamment par une nervure en forme de doigt (42), fixée au fond (26) et qui bloque le capuchon d'extrémité inférieur (46) dans sa position de rotation.

16. Filtre à liquide selon l'une des revendications 13 ou 14,
**caractérisé en ce que**
le premier canal de sortie (58) présente une section annulaire dans le manchon tubulaire (55) et est dirigé concentriquement au second canal de sortie (59).

17. Filtre à liquide selon l'une des revendications 15 et 16,
**caractérisé en ce que**
le branchement intérieur (35), l'ouverture de canal (41) et la surface formant épaulement (25) se situent essentiellement dans le même plan radial qui maintient à distance le capuchon d'extrémité inférieur (46) par le joint moulé (48).

18. Filtre à liquide selon l'une des revendications 3 à 17,
**caractérisé en ce qu'**
une tôle de fixation (49) est reliée au capuchon d'extrémité inférieur (46) en forme d'anneau de cercle, cette tôle constituant avec le capuchon d'extrémité, une fente annulaire, radialement ouverte vers l'extérieur et le joint moulé (48) ayant une section en forme de L est engagé par une branche dans cette fente.
